# EUROPEAN PATENT APPLICATION

(11) **EP 2 015 550 A1**
(43) Date of publication of application: **14.01.2009**
(21) Application number: 07112270.9
(22) Date of filing: 11.07.2007
(51) Int. Cl.: H04M 1/73

(54) **Method for a cordless communication system and communication system**

(71) Applicant: Swissvoice SA, 1170 Aubonne (CH)
(72) Inventor: Götte, Rudolf, 4562 Biberist (CH); Furter, Reinhard, 4562 Biberist (CH)
(74) Representative: Rutz, Peter

(57) **Abstract**

Method for a cordless communication system, particularly a communication system operating according to the DECT-standards, comprising at least one Base Station (RFP) and at least one Mobile Station (PP), which are changing states based on operating conditions, interactions between the Base Station (RFP) and the Mobile Station (PP) and based on requests entered by the user or received from a network that is connected to the Base Station (RFP), such as a request to establish or release a connection. According to the present invention, both the Base Station (RFP) and the Mobile Station (PP) enter a low radiation mode, after the release of the last connection. In the low radiation mode the Base Station (RFP) and the Mobile Station (PP) cease transmission and individually start scanning for a reactivation signal, that is sent from the Base Station (RFP) or from the Mobile Station (PP) in the event that a stimulus has been detected, and based on that changes of state within the low radiation mode and/or a return to the Normal Mode of operation can be performed.

## Description

The present invention relates to a method for a cordless communication system, a cordless communication system, a Base Station and a terminal according to claim 1, 10, 11 respectively 12.

More particularly, the present invention relates to a method for cordless communication between terminals operating e.g. according to the DECT (Digital Enhanced Cordless Telecommunications) standards (see ETS 300 175 part 1 through part 8) as standardised by the European Telecommunications Standardisation Institute (ETSI), or operating according to the PWT (Personal Wireless Telecommunications) standard that has been standardised by the Telecommunications Industry Association (TIA).

Still further, the present invention relates to individual devices of a cordless communication system such as terminals and Base Stations, which operate according to the inventive method.

A general description of DECT-systems can be found in [1], Klaus Debes, "Minimierung elektromagnetischer Felder des Mobilfunks, UMTS, DECT, Powerline und Induktionsfunkanlagen", Abschlussbericht, Vorgangsnummer: 386 4576 00, IABG mbH, Ottobrunn 16. July 2004, chapter 5.3, page 71 ff..

According to [1] the public discussion about the impact of electromagnetic fields in mobile communications is still ongoing. Hence, the common demand for general decrease of electromagnetic fields, driven by interested circles and action groups still persists. In [1], chapter 5, DECT-systems are classified in terms of radio emissions. RF exposure requirements are defined in ETS 300 175-2, annex A.

Possible solutions and methods to reduce electromagnetic fields in mobile communication systems are described in [1], chapters 10 to 12. For the further reduction of electromagnetic fields of DECT devices, a power regulation method or a "sleep-mode" could be implemented.

With the implementation of the power regulation method, which requires considerable efforts on the side of the manufacturer, disturbing radiation can be reduced. However, it would be desirable to further and more efficiently reduce radiation of DECT-systems.

Various manufacturers have implemented the "sleep-mode" mode in their systems, which is started by parking the terminal in the Base Station. Subsequently the Base Station will not be required to operate as long as no call is received and the terminal remains in the Base Station. Multiple handsets and Base Stations without charger can not support this feature. Still further, users may forget to place the terminal into the charger.

The present invention is therefore based on the object of providing an improved method for a cordless communication system, an improved cordless communication system, an improved Base Station and an improved terminal operating according to said method, with which, a significant reduction of radiation emission can be achieved.

It is a further object of the invention to provide a method that allows the operation of multiple handsets in the same system in a low radiation mode.

Still further it is an object of the invention to provide a method that allows the operation of the cordless communication system if the mobile terminal is not placed into the charger of the Base Station or if the Base Station does not even comprise a charger for placing the mobile terminal.

It is another object of the invention to provide a method that allows minimising delays in call setup for incoming and outgoing calls.

### SUMMARY OF THE INVENTION

The above and other objects of the present invention are achieved by a method for a cordless communication system, a cordless communication system, a Base Station and a mobile terminal operating according to said method, as defined in claim 1, claim 10, claim 11 and claim 12 respectively.

The inventive method is used in a cordless communication system, particularly a communication system operating according to the DECT-standards, comprising at least one Base Station and at least one Mobile Station, which are changing states based on operating conditions, interactions between the Base Station and the Mobile Station and based on requests entered by the user or received from a network that is connected to the Base Station, such as a request to establish or release a connection.

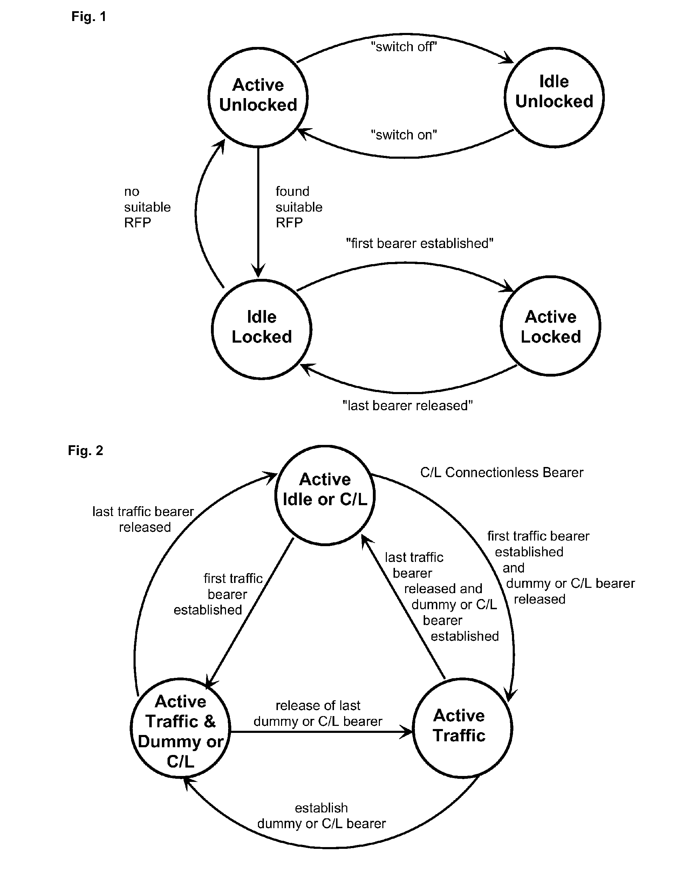

The states the Base Station and Mobile Station of a DECT-communication system can enter are defined in [2], ETSI standard EN 300 175-3 V2.0.1 (2007-03), chapter 4.3, pages 20-21 and shown in figures 1 and 2 below.

According to the present invention, both the Base Station and the Mobile Station enter a low radiation mode after the release of the last connection. In the low radiation mode the Base Station and the Mobile Station cease transmission and individually start scanning for a reactivation signal that is sent from the partner station in the event that a stimulus has been detected. Based on the detected stimulus changes of state within the low radiation mode and/or a return to the Normal Mode of operation can be performed.

Hence, after the release of the last connection and preferably after a fixed or variable delay, both, the Base Station and the Mobile Station, enter the low radiation mode and cease transmission of signals and emission of radiation. For example, if the last call was terminated in the evening and the next call was received next morning, then no radiation has been emitted by the cordless communication system during the whole night, assuring the user to be in a healthy environment, regardless of the present opinion concerning the harmfulness of electromagnetic radiation.

For returning to Normal Mode various stimuli can be used individually or in combination. As soon as the setup of a call is requested the return to Normal Mode is required. Since for the initiation of a call with the Mobile Station various key entries may be required, the stimulus is generated with the entry of the last command. Further, before the connection can be set up, the cordless communication system must return to Normal Mode, so that a delay occurs, which does not happen in Normal Mode.

In order to avoid or reduce this delay the stimulus is preferably generated with the entry of the first command on the keyboard.

The delay can further be reduced if a stimulus is received from a mechanical, optical or acoustical sensor that indicates an action, e.g. a movement of the user. Hence the cordless communication system can return to Normal Mode before the user has entered a command or even picked up the Mobile Station.

In a further preferred embodiment, a program is provided that indicates the time when the cordless communication system shall be in Normal Mode. The periods, in which the cordless communication system shall be in Normal Mode may be set by the user. In order to avoid programming by the user the program preferably registers the occurrences, when calls were set-up. In the event that the user was making calls regularly in the morning and in the evening, the program preferably sets the cordless communication system into Normal Mode for these periods, thus avoiding any delay. Hence, the cordless communication system performs an individual adaptation to the habits of the users.

In a preferred embodiment the Base Station enters the low radiation mode from the Active_Idle state that is defined by the DECT-Standard preferably after a predetermined period after the last connection has been released.

The Mobile Station enters the low radiation mode from the Active_Unlocked state or the Idle_Locked state, which are defined by the DECT-Standard, preferably after a predetermined period after the last connection has been released. In the Idle_Locked state the Mobile Station can receive commands from the Base Station, which may transfer all Mobile Station into the low radiation mode whenever considered appropriate.

The Base Station and the Mobile Station preferably comprise programs operating according to proprietary protocols in order for receiving, processing and/or sending escape commands, such as escape commands defined in the DECT-standard, that are used for controlling the change of states of the Base Station (RFP) and the Mobile Station (PP),
a) for activating or deactivating the low radiation mode, and/or
b) for entering the low radiation mode, and/or
c) for changing states within the low radiation mode, and/or
d) for leaving the low radiation mode.

When activating the low radiation mode, the Mobile Stations and the Base Station are ready to send and receive the escape-messages and to execute the proprietary programs in order to enter or leave the low radiation mode or for changing states within the low radiation mode (LRM).

In these LRM states, the device, the Base Station or the Mobile Station, which has received the stimulus, starts to act as a Base Station.

When receiving the stimulus, the Base Station preferably goes to its Normal Mode with a standardised state (ACTIVE_IDLE) and starts sending a reactivation signal. When receiving the reactivation signal the Mobile Station leaves the low radiation mode and preferably returns to the standardised state (IDLE LOCKED).

When receiving the stimulus, the Mobile Station starts acting as a virtual Base Station towards the Base Station, which acts as a virtual Mobile Station. After the receipt of a stimulus, the Mobile Station preferably enters a state (LRM_Active_Idle) within the low radiation mode that corresponds to a standardised state (Active_Idle) of the Base Station. In this state the Mobile Station emits the reactivation signal on which the Base Station is locking in. Subsequently the Base Station enters a state (LRM_Active_Idle) within the low radiation mode that corresponds to a standardised state (Active_Idle) of the Mobile Station. In these states, the stations, the Mobile Station acting as Base Station and the Base Station acting as Mobile Station, exchange messages and subsequently return to Normal Mode.

Preferably the Base Station commands the activation and entry of the low radiation mode for both, the Base Station and the Mobile Station. Alternatively the Base Station and the Mobile Station activate and enter the low radiation mode individually.

After the low radiation mode has been entered the Base Station and/or the Mobile Station scan continuously or in intervals for the reactivation signal that is emitted by the partner device. Preferably the scanning is performed by the Mobile Stations in a fraction of a cycle, e.g. 10% - 25%, for a length of 2-5 seconds. With these values the power consumption of the stations is reduced to a minimum. The Base Station may scan continuously.

The reactivation signal is preferably a dummy bearer, on which the receiving station is locking in as soon as it is detected. In order to accelerate the return to the Normal Mode, one or more dummy bearers can be set up on predetermined carriers. Hence, the receiving station knows exactly where to look for.

The inventive solution can be applied in any known cordless communication system or any configuration of a known cordless communication system. There is no limitation in the number of Base Stations and Mobile Stations. Further the inventive solution is not limited to a specific handling of the devices. In particular it is not necessary to put the Mobile Stations into a charger.

### BRIEF DESCRIPTION OF THE DRAWINGS

Some of the objects and advantages of the present invention have been stated, others will appear when the following description is considered together with the accompanying drawings, in which:
- Fig. 1: shows the states a Mobile Station can enter according to the DECT-standard,

- Fig. 2: shows the states a Base Station can enter according to the DECT-standard,
- Fig. 3: shows the states a Mobile Station can enter according to present invention,
- Fig. 4: shows the states a Base Station can enter according to present invention,
- Fig. 5: shows the commands sent from the Base Station in order to transfer the related Mobile Stations into the low radiation mode,
- Fig. 6: shows the commands exchanged between the Base Station and the Mobile Station, after the Base Station has detected a stimulus, i.e. a call request while being in low radiation mode; and
- Fig. 7: shows the commands exchanged between the Base Station and the Mobile Station, after the Mobile Station has detected a stimulus, i.e. a call request while being in low radiation mode.

### DETAILED DESCRIPTION OF THE PREFERRED EMBODIMENTS

The states the Base Station and Mobile Station of a DECT-communication system can enter according to the DECT-standard are defined in [2], ETSI EN 300 175-3 V2.0.1 (2007-03), chapter 4.3, pages 20-21 and shown in figures 1 and 2 below.

Figure 1 shows states, the Base Station of a DECT-communication system can enter according to the DECT-standard and Figure 2 shows the states, a Base Station can enter according to the DECT-standard.

According to the [2] a Base Station can exist in one of four major states at the MAC layer:
1) In the Inactive state (not shown), the Base Station is not receiving or transmitting.
2) In the Active_Idle or C/L (connectionless bearer) state, the Base Station has either at least one dummy bearer or at least one connectionless downlink bearer, and a receiver that is scanning the physical channels in a known sequence.
3) In the Active_Traffic state, the Base Station has at least one traffic bearer, but does not have a dummy or a connectionless downlink bearer.
4) In the Active_Traffic_and_Dummy or C/L state the Base Station has at least one traffic bearer and is also maintaining one dummy or connectionless downlink bearer.

A Mobile Station can exist in one of four major states at the MAC layer:
1) In the Active_Locked state the Mobile Station is synchronized to at least one RFP transmission and has one or more connections in progress.
2) In the Idle_Locked state the Mobile Station is synchronized to at least one transmission of a Base Station. It is able to make or receive connections, but has no connections in progress.
3) In the Active_Unlocked state the Mobile Station is not synchronized to any Base Station transmissions, and is unable to make or receive connections. The Mobile Station makes occasional attempts to detect a suitable Base Station to enter the Idle_Locked state.
4) In the Idle_Unlocked state the Mobile Station is not synchronized to any Base Station and does not attempt to detect Base Stations.

In the Idle_Locked state, several different modes of operation exist:
a) scanning mode: where the Mobile Station's receiver scan sequence is synchronized with that of the RFP.
b) high duty cycle Idle_Locked mode: where the Mobile Station receives 6 times per multiframe.
c) normal Idle_Locked mode: where the Mobile Station typically receives once per multiframe.
d) low duty cycle Idle_Locked mode: where the Mobile Station typically receives less than once per multiframe.

The inventive system is capable of entering additional states by means of escape routes, which are defined in [3], ETSI standard EN 300 175-1 V2.0.1 (2007-03), chapter 8, pages 24-25.

Two primary escape routes are defined within the Common Interface (CI) standard, one at the Medium Access Control (MAC) layer and one at the network layer. In both cases these escape routes provide the possibility for manufacturers to branch into a family of proprietary protocols. According to the standard, these branches provide a compatible method for proprietary systems to operate without causing confusion or interference to systems that implement the other CI provisions.

The lowest branch occurs at the MAC layer. The branch is defined at this level in order to ensure a minimum level of conformance to the CI. The minimum level of conformance therefore includes the physical layer and the lower parts of the MAC layer (in particular, the MAC A-field header, A-field CRC and the channel selection procedures).

Proprietary information can be transferred for example by using the MAC control channels such as the system information channel (Q), which is described in [2], chapter 5.3.4, page 26 ff. The system information channel, Q, is a simplex data channel used to supply Mobile Stations with information about the DECT Base Station. Most Q channel data is transmitted as repeated broadcasts on traffic, connectionless and dummy bearers. Q channel data may also be transmitted on request. Some Q channel information is needed by a Mobile Station for example to change from the Active_Unlocked state to the Idle_Locked state.

Escape-messages sent over the system information channel are marked with an escape-bit set to one, as shown in [2], chapter 7.2.3.2.5, page 95. The format of an escape-message, which may carry proprietary information (reserved bits a12 to a47), is shown in [2], chapter 7.2.3.8.1, page 108.

With the inventive method, the escape-messages are used to transfer the Base Station and the Mobile Station to a first state of the low radiation mode and/or to return the Base Station and the Mobile Station to the Normal Mode or even to initiate changes of states within the low radiation mode.

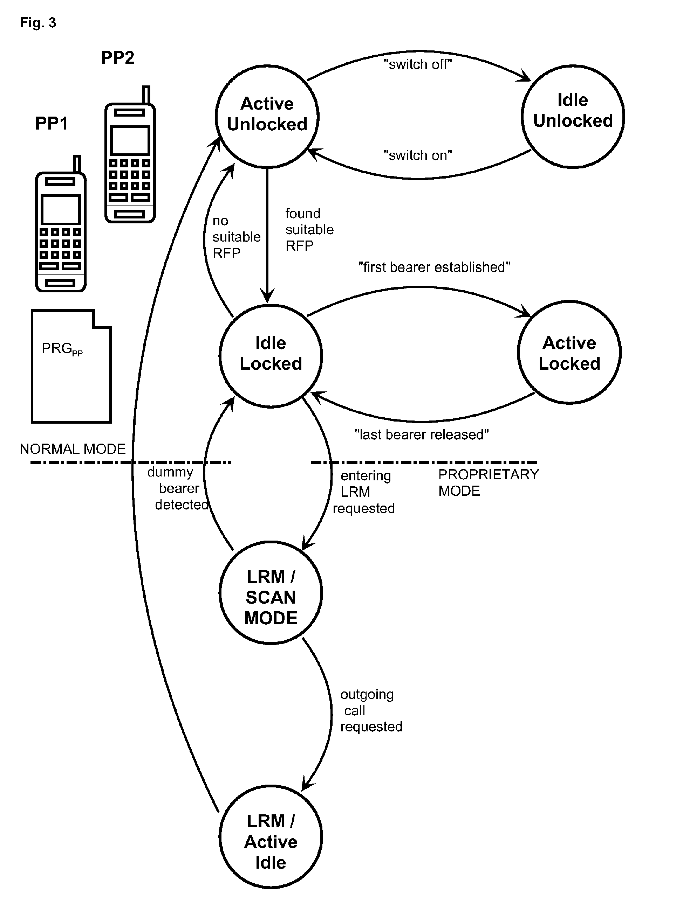

Figure 3 shows the states a Mobile Station PP, PP1, PP2, ... can enter according to present invention. The upper half of the drawing shows the standardised states of a DECT Mobile Station that have been discussed above with reference to figure 1. In these states the cordless communication system is in the standardised DECT-mode or Normal Mode. The lower half of the drawing shows the states the Mobile Station PP can enter within a proprietary mode, namely the low radiation mode.

The transition from the Normal Mode to the low radiation mode is preferably performed when the Mobile Station PP is in the Idle_Locked state, in which it can communicate with the Base Station RFP. From this Idle_Locked state a controlled transfer into the LRM_Scan state can be performed. In this state the Mobile Station PP does no longer transmit signals, but scans for an external reactivation signal that is broadcast by the Base Station RFP, when a return to the Normal Mode is required. Further the Mobile Station observes internal signals or messages that contain a stimulus, indicating that an action, normally the return to the Normal Mode shall be performed. In the event that a reactivation signal, preferably a dummy bearer is detected, then the Mobile Station PP locks onto the dummy bearer and returns to the Idle_Locked state in Normal Mode. From this point on the actions, e.g. the setup of a connection, are performed as specified in the DECT-standard.

In the event that an internal stimulus, e.g. the request for setting up a call connection, is detected, the Mobile Station PP enters the LRM_Active_Idle state. In this state the Mobile Station is broadcasting a reactivation signal, preferably a dummy bearer that will be detected by the Base Station RFP. Hence, the Mobile Station PP acts as a Base Station itself while the Base Station RFP behaves like a Mobile Station. After the connection between the Mobile Station PP and the Base Station RFP has been set up, escape-messages can again be exchanged, based on which the Mobile Station PP is transferred to the Normal Mode, preferably to the Active_Unlocked state shown in the upper half of figure 1.

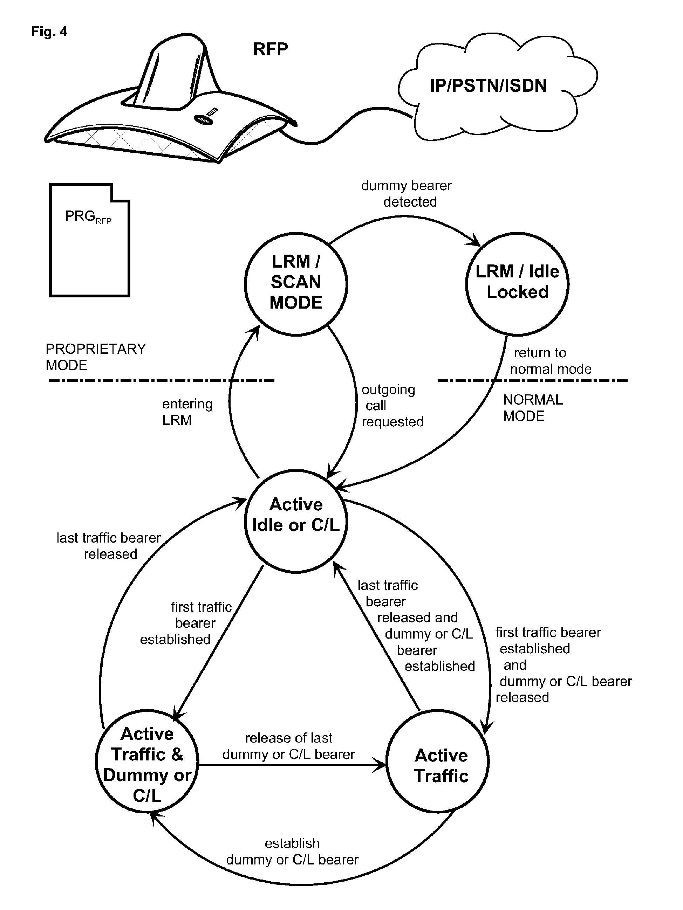

The state transitions of the Base Station RFP will be described with reference to figure 4. The lower half of the drawing shows the standardised states of a DECT Base Station that have been discussed above with reference to figure 2. In these states the cordless communication system is in the standardised DECT-mode or Normal Mode. The upper half of the drawing shows the states the Base Station RFP can enter within the low radiation mode.

The transition from the Normal Mode to the low radiation mode is preferably performed when the Base Station RFP is in the Active_Idle state, in which it can communicate with the Mobile Station PP. From this Active_Idle state a transfer into the LRM_Scan state can be performed. In this state the Base Station RFP does no longer transmit signals, but scans for an external reactivation signal that is broadcast by the Mobile Station PP, when a return to the Normal Mode is required. Procedures for this event on the side of the Mobile Station PP have been described above. As described above, after the detection of a stimulus, the Mobile Station PP broadcasts a dummy bearer in the LRM_Active_Idle state which is detected by the Base Station RFP. After the detection of a dummy bearer sent by the Mobile Station PP the Base Station RFP enters the LRM_Idle_Locked state, which corresponds to the standardised Idle_Locked state of the Mobile Station PP. In this locked state the stations PP and RFP exchange escape-messages and return to the Normal Mode. In Normal Mode the Base Station RFP sets up the dummy bearer onto which the Mobile Station PP locks in accordance with standardised procedures for setting up the requested call.

Further the Base Station RFP observes internal signals or messages, such as a call request received from an associated network (e.g. the ISDN or the Internet via VOIP), that contain a stimulus, indicating that an action, normally the return to the Normal Mode, shall be performed. After the receipt of the stimulus the Base Station RFP returns to the Active_Idle state in the Normal Mode and starts sending at least one dummy bearer. Based on the receipt of this dummy bearer the Mobile Station RFP returns to the Idle_Locked state as described above.

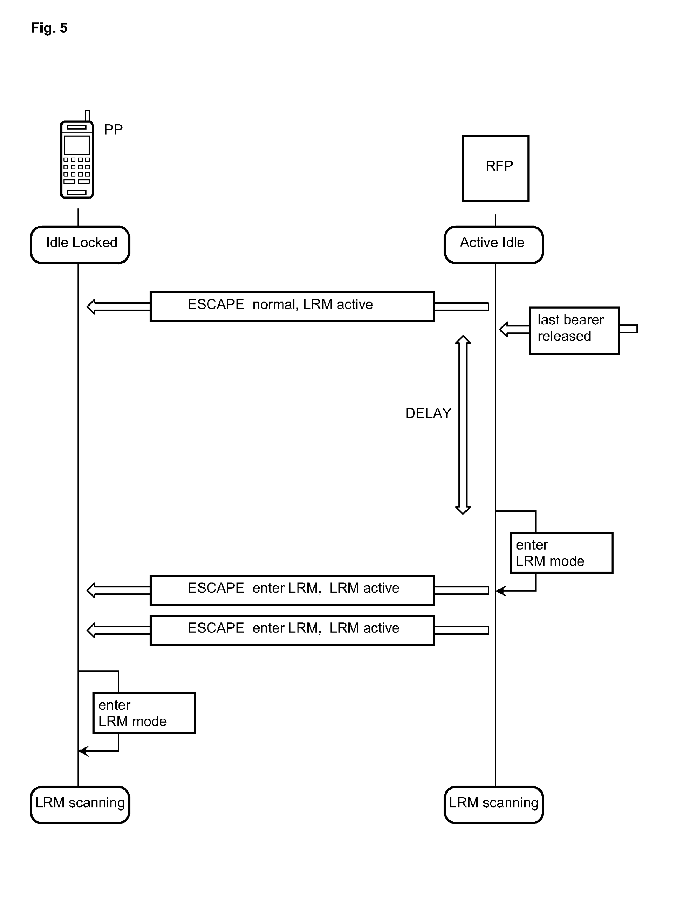

Below the transitions into and out of the low radiation mode are described based on the related message flows shown in figures 5, 6 and 7.

Figure 5 shows the commands broadcast by the Base Station RFP in order to transfer the related Mobile Stations PP into the low radiation mode. The Base Station RFP sends a first escape-command to enable the Mobile Station PP to enter the low radiation mode. Then after the last bearer has been released the Base Station RFP waits for the count-down of a delay period and then, preferably repeatedly, sends escape-massages ordering the Mobile Stations PP to enter the low radiation mode. Finally the Base Station RFP and the Mobile Station PP are in the scan state of the low radiation mode.

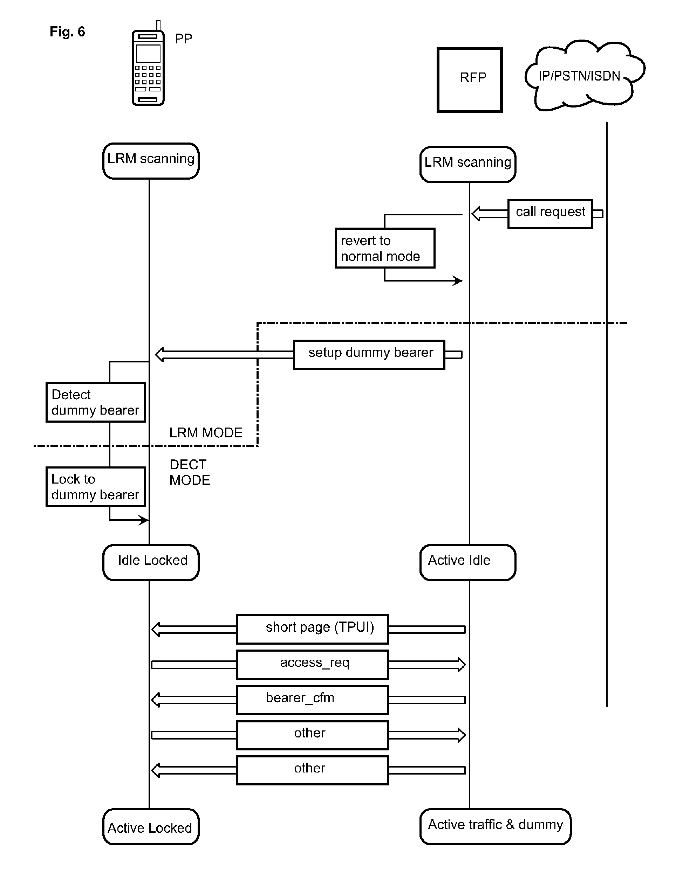

Figure 6 shows the Base Station RFP and the Mobile Station PP in the low radiation mode before the Base Station RFP receives a call request from an associated network. After the receipt of the call request the Base Station RFP returns to the Normal Mode and broadcasts a dummy bearer. The Mobile Station PP detects and locks to the dummy bearer and reverts to the Normal Mode. At this stage the Base Station RFP is in the Active_Idle state and the Mobile Station PP is in the Idle_Locked state capable of exchanging standardised messages (page, access request, bearer confirm, ...) to set up the requested call connection. After the call connection has been set up the Base Station RFP is in the Active_Traffic state and the Mobile Station PP is in the Active_Locked state.

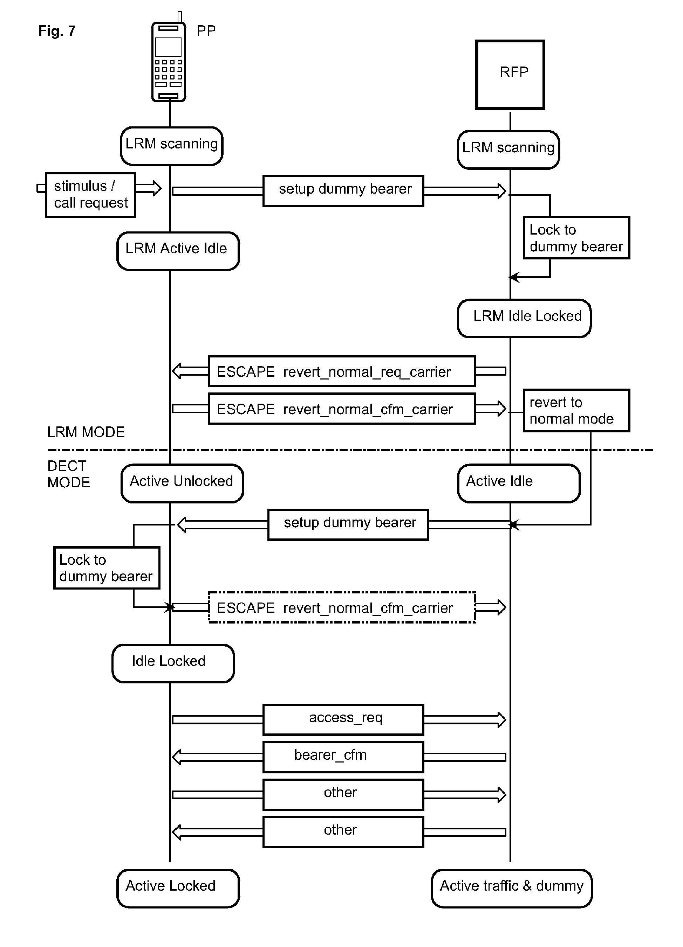

Figure 7 shows the Base Station RFP and the Mobile Station PP in the low radiation mode before the Mobile Station PP receives a call request from the user. After the receipt of the call request the Mobile Station PP enters the LRM_Active_Idle state and sets up a dummy bearer, thus imitating a DECT Base Station. The Base Station RFP detects and locks to the dummy bearer and enters the LRM_Idle_Locked state. In the current states the Base Station RFP and the Mobile Station PP are able to exchange escape-messages. The Base Station RFP instructs the Mobile Station to enter the Normal Mode and returns as well to the Normal Mode. The Base Station RFP is now in the Active_Idle state and the Mobile Station PP in the Active_Unlocked state. According to the DECT standard the Base Station RFP sets up a dummy bearer on which the Mobile Station PP can lock thus entering the Idle_Locked state. At this stage the Base Station RFP is in the Active_Idle state and the Mobile Station PP is in the Idle_Locked state capable of exchanging standardised messages (access request, bearer confirm, ...) in order to set up the requested call connection. After the call connection has been set up the Base Station RFP is in the Active_Traffic state and the Mobile Station PP is in the Active_Locked state.

In order to perform the described activities, programs PRG_{RFP}; PRG_{PP} operating according to proprietary protocols are provided in the Base Station RFP and in the Mobile Station PP. Hence, known Base Stations and terminals can easily be adapted to operate according to the inventive method.

Typically the cordless communication system will return to the Normal Mode when the setup of a call connection has been detected already. However, as mentioned above, the Base Station RFP and/or the Mobile Station PP preferably comprise sensors that are capable of sensing emissions or movements by the user. The resulting sensor signals may be processed as stimuli which indicate that there is a high probability that the user will use the cordless communication system within a short time period. Hence the programs PRG_{RFP}; PRGpp are preferably adapted to process sensor signals, e.g. signals from the keyboard, signals from the microphone or signals from an optical sensor.

Although the inventive method and cordless communication system have been described and illustrated based on advantageous embodiments, the invention is not limited to the commands and procedures used in the examples. Other or future generations of cordless communications may provide further options for communication between the devices. Hence, alternatives to the described exchange of escape-messages can easily be adapted to operate according to the present invention.

### REFERENCES

[1] Dipl.-Ing. Klaus Debes, "Minimierung elektromagnetischer Felder des Mobilfunks, UMTS, DECT, Powerline und Induktionsfunkanlagen", Abschlussbericht, Vorgangsnummer: 386 4576 00, IABG mbH, Ottobrunn 16. July 2004, chapter 5.3, page 71 ff..
[2] ETSI standard EN 300 175-3 V2.0.1 (2007-03)
[3] ETSI standard EN 300 175-1 V2.0.1 (2007-03)

## Claims

1. A method for a cordless communication system, particularly a communication system operating according to the DECT-standards, comprising at least one Base Station (RFP) and at least one Mobile Station (PP), which are changing states based on
- operating conditions,
- interactions between the Base Station (RFP) and the Mobile Station (PP) and
- based on requests entered by the user or received from a network that is connected to the Base Station (RFP), such as a request to establish or release a connection,
**characterised in that** after the release of the last connection, both the Base Station (RFP) and the Mobile Station (PP) enter a low radiation mode, in which the Base Station (RFP) and the Mobile Station (PP) cease transmission and individually start scanning for a reactivation signal, that is sent from the Base Station (RFP) or from the Mobile Station (PP) in the event that a stimulus has been detected, and based on that changes of state within the low radiation mode and/or a return to the Normal Mode of operation can be performed.

2. Method according to claim 1, wherein the stimulus is
a request to establish a connection; and/or
a signal received from a mechanical, optical or acoustical sensor, indicating an action of the user and/or
a signal provided by a program that indicates the time when the cordless communication system shall be in Normal Mode, which time is predetermined by the user or by the program that establishes a history indicating the periods of activity of the cordless communication system.

3. Method according to claim 1 or 2, wherein the Base Station (RFP) enters the low radiation mode from the Active_Idle state, that is defined by the DECT-Standard preferably after a predetermined period after the last connection has been released and wherein the Mobile Station (PP) enters the low radiation mode from the Idle_Locked state, that is defined by the DECT-Standard preferably after a predetermined period after the last connection has been released.

4. Method according to claim 1, 2 or 3, wherein the Base Station (RFP) and in the Mobile Station (PP) comprise programs (PRG_{RFP}; PRG_{PP}) operating according to proprietary protocols in order for receiving, processing and/or sending escape commands, such as escape commands defined in the DECT-standard, that are used for controlling the change of states of the Base Station (RFP) and the Mobile Station (PP),
a) for activating or deactivating the low radiation mode, and/or
b) for entering the low radiation mode, and/or
c) for changing states within the low radiation mode, and/or
d) for leaving the low radiation mode.

5. Method according to claim 1, 2, 3 or 4, wherein the Base Station (RFP) commands the activation and entry of the low radiation mode for both the Base Station (RFP) and the at least one Mobile Station (PP) or wherein the Base Station (RFP) and the Mobile Station (PP) activate and enter the low radiation mode individually.

6. Method according to one of the claims 1 to 5, wherein the Base Station (RFP) and/or the Mobile Station (PP) scan continuously or in intervals for the reactivation signal, preferably with a length of 2-5 seconds and a duty cycle of 10% - 25%.

7. Method according to one of the claims 1 to 6, wherein the reactivation signal is a dummy bearer, on which the receiving station (RFP or PP) is locking in as soon as it is detected and wherein one or more dummy bearers are set up preferably on predetermined carriers.

8. Method according to claim 7, wherein the Base Station (RFP) leaves the low radiation mode and returns to the standardised state (ACTIVE_IDLE) as soon as a stimulus is detected and wherein the Mobile Station (PP) leaves the low radiation mode and returns to the standardised state (IDLE_LOCKED) as soon as a dummy bearer that is sent by the Base Station (RFP), has been detected.

9. Method according to claim 7 or 8, wherein, after the receipt of a stimulus, the Mobile Station (PP) enters a state (LRM_Active_Idle) within the low radiation mode that corresponds to a standardised state of the Base Station (RFP), in which the Mobile Station (PP) emits the reactivation signal, on which the Base Station (RFP) is locking in and subsequently is entering a state (LRM_Active_Idle) within the low radiation mode that corresponds to a standardised state of the Mobile Station (PP), in which the stations, the Mobile Station (PP) acting as Base Station and the Base Station (RFP) acting as Mobile Station, exchange messages and subsequently return to Normal Mode.

10. A cordless communication system, particularly a communication system operating according to the DECT-standards, comprising at least one Base Station (RFP) and at least one Mobile Station (PP), which are changing states based on
- operating conditions,
- interactions between the Base Station (RFP) and the Mobile Station (PP) and
- based on requests entered by the user or received from a network that is connected to the Base Station(RFP), such as a request to establish or release a connection, **characterised in that** the Base Station (RFP) and the Mobile Station (PP) comprise programs (PRG_{RFP}; PRG_{PP}) operating according to a method as defined in one of the claims 1-9.

11. A Base Station (RFP) for a cordless communication system as defined in claim 10 comprising program (PRG_{RFP}) operating according to a method as defined in one of the claims 1-9.

12. A Mobile Station (PP) for a cordless communication system as defined in claim 9 comprising program (PRG_{PP}) operating according to a method as defined in one of the claims 1-9.
